# EUROPEAN PATENT APPLICATION

(11) **EP 1 868 081 A1**
(43) Date of publication of application: **19.12.2007**
(21) Application number: 06715349.4
(22) Date of filing: 07.03.2006
(51) Int. Cl.: G06F 9/38, G06F 9/42

(54) **PROCESSOR**

(30) Priority: 08.04.2005 JP 2005112867
(71) Applicant: MATSUSHITA ELECTRIC INDUSTRIAL CO., LTD., Osaka 571-8501 (JP)
(72) Inventor: TANAKA, Tetsuya c/o Matsushita El. Ind. Co. Ltd., 2-1-61, Shiromi, Chuo-ku, Osaka 540-6207 (JP); HIGAKI, Nobuo c/o Matsushita El. Ind. Co. Ltd., 2-1-61, Shiromi, Chuo-ku, Osaka 540-6207 (JP); HEISHI, Taketo c/o Matsushita El. Ind. Co. Ltd., 2-1-61, Shiromi, Chuo-ku, Osaka 540-6207 (JP)
(74) Representative: Pautex Schneider, Nicole Véronique
(86) International application number: PCT/JP2006/304379
(87) International publication number: WO 2006/112190

(57) **Abstract**

A processor (100) includes an ordinary instruction buffer (122) for storing and supplying one or more instructions fetched from an instruction cache (10), a TAR instruction buffer (123) for storing the one or more instructions fetched from the instruction cache (10) and supplying them secondarily, a selector (121) for seiecting either the ordinary instruction buffer (122) or the TAR instruction buffer (123) as an instruction supplying source, and an instruction fetch control unit (102) for fetching, when a TAR filling instruction is executed, one or more instructions specified by the TAR filling instruction, and for controlling the selector (121) to select the TAR instruction buffer (123), in the case where case one or more fetched instructions are repeatedly supplied, thereby to supply an instruction through the selector (121) from the TAR instruction buffer (123).

## Description

### Technical Field

The present invention relates to a processor which fetches and executes an instruction stored in an instruction cache, and particularly to a processor which is able to supply an instruction even when omitting an access to the instruction cache when the instruction in a loop part is executed.

### Background Art

In recent years, digital home appliances such as cellular phones, digital video cameras, digital video recorders and others have been widely used. Low power and high performance processors require processors embedded in these products.

For this purpose, for example, a processor is proposed, in which a penalty cycle due to missing branch prediction is reduced to control power consumption, thus improving processing ability (for example, see Non-patent Document 1).

Specifically, this processor is provided with two instruction buffers in a unit to control the instruction fetch and generally stores and supplies the instruction fetched from the instruction cache using either one of the instruction buffers. When the branch instruction is executed, a succeeding instruction and a branch target instruction fetched from the instruction cache are stored separately using two instruction buffers, and are supplied from either one of the instruction buffers according to the branch target.

For example, when the first instruction buffer is presently used as an instruction supplying source, the branch target instruction is fetched from the instruction cache to store and supply in the second instruction buffer when a branch target instruction (TAKEN) is predicted in a decode stage of the branch instruction. When prediction in an execution stage of the branch instruction fails, that is, the actual branch is a succeeding instruction (NOT TAKEN), the instruction in the first instruction buffer is input into a pipeline to discard the instruction in the second instruction buffer in order to reduce a penalty caused by latency of the instruction fetch.

Furthermore, this processor is provided with the third instruction buffer different from these instruction buffers. Before executing the branch instruction, an instruction enabling to specify the branch target address in its branch instruction is executed to look ahead the instruction in its branch target address to store in the third instruction buffer, thus reducing a penalty caused by latency of the instruction fetch.
Non-patent Document 1: Naohiko IRIE, Fumio ARAKAWA, Kunio UCHIYAMA, Shinichi Yoshioka, Atsushi HASEGAWA, Kevin IADONATE, Mark DEBBAGE, David SHEPHERD, and Margaret GEARTY, "Branch Micro-Architecture of an Embedded Processor with Split Branch Architecture for Digital Consumer Products", IEICE TRANS. ELECTRON., VOL. E85-C, No.2 February 2002, pp. 315-322.

### Disclosure of Invention

### Problems that Invention is to Solve

However, since this processor is provided with two kinds of the instruction buffers with different properties, it is necessary to separately apply the instruction buffer in response to a miss in the branch prediction even for the same branch instruction. Consequently, control to switch the instruction buffer becomes complex. Since in a decode stage of the branch instruction, the branch target instruction is fetched from the instruction cache to store in the second instruction buffer, a period enabling to fetch is too short to store a sufficient instruction, thus making the supply difficult. Consequently, even when an instruction buffer capacity is increased to reduce an access frequency of the instruction cache in order to execute a loop process and others with a lower power and a higher speed, there is a problem that it produces a small effect.

The present invention is conceived in order to the above problems and an object of the present invention is to provide a processor, which can execute a loop process and others with a lower power and a higher speed.

### Means to Solve the Problems

In order to achieve the above object, the processor according to the present invention is a processor which (a) fetches an instruction stored in an instruction cache, and executes the instruction, the processor including: (b) a main instruction buffer which stores and supplies one or more instructions fetched from the instruction cache; (c) a first sub-instruction buffer which stores and secondarily supplies one or more instructions fetched from the instruction cache; (d) a selector which selects either the main instruction buffer or the first sub-instruction buffer as an instruction supply source; and (e) an instruction fetch control unit which: fetch one or more instructions from a first address to store in the first sub-instruction buffer when the instruction is supplied, via the selector, from the main instruction buffer and a first filling instruction is executed, the first filling instruction indicating to fill one or more instructions fetched from the first address of the instruction cache in the first sub-instruction buffer; and control the selector to select the first sub-instruction buffer and to supply the instruction via the selector from the first sub-instruction buffer in the case where one or more instructions fetched from the first address are repeatedly supplied.

Thereby the first sub-instruction buffer secondarily used is provided in addition to the main instruction buffer involved in a main section so that repeated access to the instruction cache in a loop part allows omitting to fetch. An instruction is then supplied from the first sub-instruction cache and others to reduce a penalty of the pipeline and fill idle portions in the pipeline caused by branching. Furthermore, omitting an access to the instruction cache can avoid a wait for access and others, improving performance of the execution process. A period to fetch by the first filling instruction can be adjusted to adjust a period to store in the first sub-instruction buffer. This allows storage and supply of a sufficient instruction by executing the first filling instruction after precalculating a sufficient period to fully express its effect even when a capacity of the instruction buffer is increased. Consequently, an access frequency to the instruction cache is reduced to enable execution of the loop process and others at high speed while keeping power consumption under control.

The present invention may be implemented as not only a processor but also a method to control the processor (referred to as an instruction filling method hereinafter). It may also be achieved as Large Scale Integration (LSI), in which a function provided by the processor related to the present invention is built (referred to as instruction filling function hereinafter), an IP core, in which an instruction filling function is configured in a programmable logic device such as Field Programmable Gate Array (FPGA), Complex Programmable Logic Device (CPLD) and others (referred to as instruction filling core hereinafter), and a recording medium, on which the instruction filling core is recorded.

### Effects of the Invention

The above processor related to the present invention is provided with the first and second sub-instruction buffers secondarily used and others in addition to a main instruction buffer applied in a main section to repeatedly access the instruction cache in a loop part and a return part in a subroutine, thus enabling to omit fetching. Instructions are then supplied from the first and second sub-instruction buffers and others, enabling to reduce a penalty of the pipeline and fill idle portions of the pipeline caused by branching. Furthermore, omitting an access to the instruction cache allows avoiding a wait for access and others, thus improving performance of the execution process. A period to fetch in the first filling instruction is adjusted to adjust a period to store in the first sub-instruction buffer. This allows storage and supply of a sufficient instruction by executing the first filling instruction after precalculating a sufficient period to fully express its effect even when a capacity of the instruction buffer is increased. Consequently, an access frequency to the instruction cache is reduced to enable execution of the loop process and others at high speed while keeping power consumption under control.

### Brief Description of Drawings

FIG. 1 is a diagram to illustrate a configuration of a processor according to embodiment 1 of the present invention.
FIG. 2 is a diagram to illustrate an example of an instruction sequence supplied to the processor according to embodiment 1 of the present invention.
FIG. 3A is a diagram to illustrate a logic circuit to inform the filling completion of TAR instruction buffer in the processor according to embodiment 1 of the present invention.
FIG. 3B is a diagram to illustrate a logic table to inform completion of the TAR instruction buffer filling of a processor according to embodiment 1 of the present invention.
FIG. 4 is a diagram to illustrate a transition of each state of the TAR instruction and an LR instruction buffers according to embodiment 1 of the present invention.
FIG. 5 is the first diagram to illustrate an instruction filling process executed in the instruction filling in the processor according to embodiment 1 of the present invention.
FIG. 6A is the second diagram to illustrate an instruction filling process executed in the instruction filling in the processor according to embodiment 1 of the present invention.
FIG. 6B is the third diagram to illustrate an instruction filling process executed in the instruction filling in the processor according to embodiment 1 of the present invention.
FIG. 7 is the first diagram to illustrate an instruction supply process executed in the instruction supply in the processor according to embodiment 1 of the present invention.
FIG. 8A is the second diagram to illustrate an instruction supply process executed in the instruction supply in the processor according to embodiment 1 of the present invention.
FIG. 8B is the third diagram to illustrate an instruction supply process executed in the instruction supply in the processor according to embodiment 1 of the present invention.
FIG. 9 is a diagram to illustrate an operational example in the instruction filling in the processor according to embodiment 1 related of the present invention.
FIG. 10 is a diagram to illustrate a configuration of a processor according to embodiment 2 of the present invention.
FIG. 11 is a diagram to illustrate the first example of an instruction sequence supplied to the processor according to embodiment 2 of the present invention.
FIG. 12 is a diagram to illustrate the second example of the instruction sequence supplied to the processor according to embodiment 2 of the present invention.
FIG. 13 is a diagram to illustrate the third example of the instruction sequence supplied to the processor according to embodiment 2 of the present invention.
FIG. 14 is a diagram to illustrate a configuration of a processor according to another embodiment of the present invention.

### Numerical References

10 Instruction cache
100, 200, 300 Processor
101 Instruction execution unit
102, 202, 302 Instruction fetch control unit
111, 211, 311 Selector
112 Ordinary instruction address register
113 TAR instruction address register
114 LR instruction address register
121, 221, 321 Selector
122 Ordinary instruction buffer
123 TAR instruction buffer
124 LR instruction buffer
213, 313 First TAR instruction address register
214, 314 Second TAR instruction address register
223, 323 First TAR instruction buffer
224, 324 Second TAR instruction buffer

### Best Mode for Carrying Out the Invention

### (First Embodiment)

Embodiment 1 according to the present invention will be described with reference to the drawings below.

A processor in the present embodiment is provided with an instruction buffer to store the instruction in the loop part in addition to the instruction buffer to ordinarily store the instruction and is characterized in that when instructions in the loop part are executed, the instructions in the loop part are once fetched to supply from the instruction buffer stored, instead of repeatedly fetching from the instruction cache.

It is further provided with the instruction buffer to store the instructions in a return part in a subroutine in addition to these instruction buffers and characterized in that when the instructions in the return part in the subroutine is executed, the instructions in the return part in the subroutine are once fetched to supply from the instruction buffer stored.

A processor in the present embodiment is described with consideration of the above aspect.

The configuration of a processor in the present embodiment is first described.

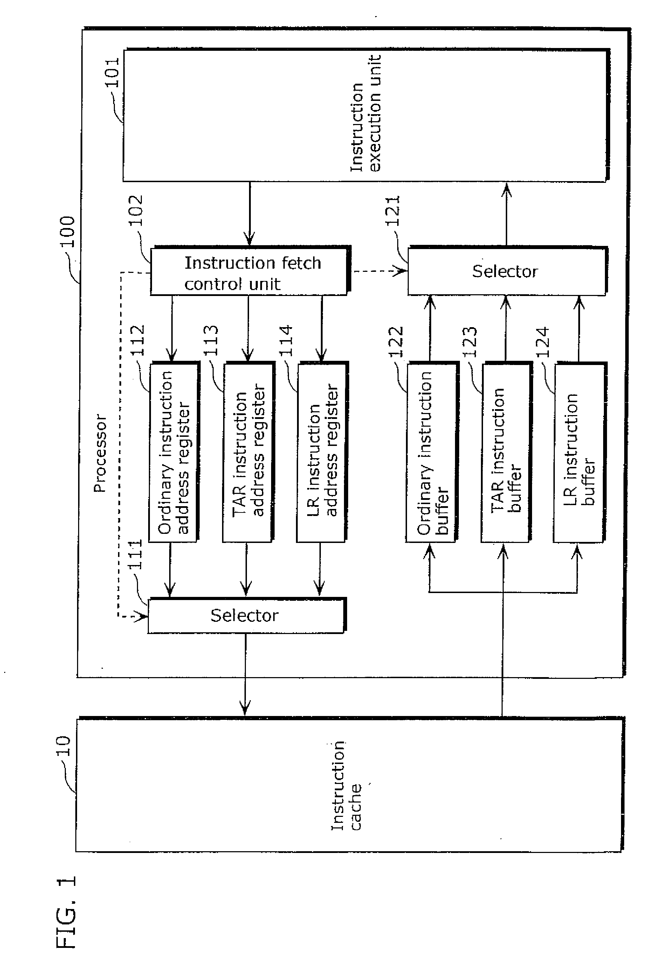

As shown in FIG. 1, a processor 100 is, in addition to an ordinary instruction buffer 122 which usually stores the instruction, provided with a TAR instruction buffer 123, which stores the instruction in the loop part among the instruction sequences stored in a cache 10. When the instruction in the loop part is executed, the instruction stored in a TAR instruction buffer 123 is supplied to an instruction execution unit 101.

Furthermore, the processor 100 is, in addition to the ordinary instruction buffer 122 and the TAR instruction buffer 123, provided with an LR instruction buffer 124 to store instructions in the return part in the subroutine. When instructions in the return part in the subroutine are executed, the instruction stored in the LR instruction buffer 124 is supplied to the instruction execution unit 101.

As an example herein, the processor 100 is provided with an instruction execution unit 101, an instruction fetch control unit 102, a selector 111, an ordinary instruction address register 112, a TAR instruction address register 113, an LR instruction address register 114, a selector 121, an ordinary instruction buffer 122, a TAR instruction buffer 123, an LR instruction buffer 124 and others.

The instruction execution unit 101 executes instructions supplied through the selector 121.

The instruction fetch control unit 102 controls the selector 111 to select the ordinary instruction address register 112, when the ordinary instruction buffer 122 is likely to have space in a case where the TAR filling instruction and the LR filling instruction are not executed in the instruction execution unit 101. Instruction at address configured in the ordinary instruction address register 112 is fetched from the instruction cache 10 to store in the ordinary instruction buffer 122.

When the TAR filling instruction is executed in the instruction execution unit 101, the instruction fetch control unit 102 also receives a filling start address configured in the TAR filling instruction from the instruction execution unit 101 to configure in the TAR instruction address register 113. Instructions of the loop part specified by the TAR filling instructions are further filled in the TAR instruction buffer 123 during an interval when the ordinary instructions are filled in the ordinary instruction buffer 122. The instruction fetch control unit 102 at this time controls betweenwhiles the selector 111 to select the TAR instruction address register 113. When instructions in the loop part specified by the TAR filling instruction are executed in the instruction execution unit 101, instructions are supplied from the TAR instruction buffer 123 to the instruction execution unit 101.

When the LR filling instructions are executed in the instruction execution unit 101, the instruction fetch control unit 102 similarly receives the filling start address set in the LR filling instruction from the instruction execution unit 101 to set in the LR instruction address register 114. A return part in the subroutine specified by the LR filling instruction is further filled in the LR instruction buffer 124 during an interval when the instructions are filled in the ordinary instruction buffer 122. The instruction fetch control unit 102 at this time controls betweenwhiles the selector 111 to select the LR instruction address register 114. When instructions in the return part of the subroutine specified by the LR filling instruction are executed in the instruction execution unit 101, instructions are supplied from the LR instruction buffer 124 to the instruction execution unit 101.

A term [TAR filling instruction] indicates an instruction, for example, indicating to start the loop part from an address specified by "LABEL" and store this loop part in the TAR instruction buffer 123 as shown in the TAR filling instruction below.

### [TAR filling instruction] SETTAR LABEL

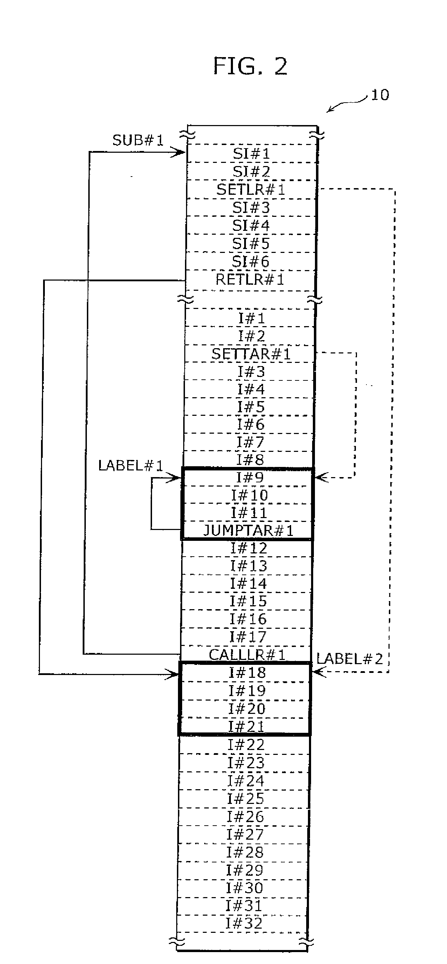

For example, SETTAR LABEL is an instruction designating to fill a loop part from instruction "I#9"at address "LABEL#1" to TAR branch instruction "JUMSTAR#1" in the TAR instruction buffer 123 as :TAR filling instruction"SETTAR#1" as shown in FIG. 2. Address "LABEL#1" herein is a branch address configured in branch instruction "JUMPTAR#1" as well as an address to start filling by TAR filling instruction "SETTAR#1" (optionally referred to as filling start address hereinafter).

As shown in FIG. 2, the TAR filling instruction is herein executed before the loop part, that is, the instruction sequence within a heavy-line frame is executed. While an instruction length to fetch from the instruction cache 10 is herein a fixed length for simplicity to fetch one instruction per cycle from the instruction cache 10, the instruction length may be a variable length as well as one or more instructions per cycle, for example, four instructions may be fetched from the instruction cache 10.

When the TAR filling instruction "SETTAR#1" is executed in the instruction execution unit 101, the instruction sequence within a heavy-line frame including the TAR branch instruction "JUMPTAR#1" is filled in the TAR instruction buffer 123.

Two instructions including an instruction to store the loop part in the TAR instruction buffer 123 and an instruction to indicate a start address of this loop part may be used instead of the one TAR filling instruction.

A term [LR filling instruction] indicates an instruction, for example, to start the return part from an address specified by a return target address of the subroutine and store this return part in the LR instruction buffer 124 as shown in the LR filling instruction below.

### [LR filling instruction] SETLR

For example, SETLR is the instruction designating to fill a return part from instruction "I#18" at address "LABEL#2" to a predetermined number of instructions, for example, to instruction "I#21" in a case of four instructions, in the LR instruction buffer 124 as the LR filling instruction "SETLR#1" as shown in FIG. 2. Address "LABEL#2" herein is a return address configured in return instruction "RETLR#1" as well as an address to start filling by the LR filling instruction "SETLR#1" ( hereinafter optionally referred to as filling start address).

As shown in FIG. 2, the LR filling instructions are herein executed before the return part, that is, the instruction sequence within a heavy-line frame is executed.

When the LR filling instruction "SETLR#1" is executed in the instruction execution unit 101, the instruction sequence within a heavy line frame including succeeding instruction "I#18" of CALLLR#1 is filled in the LR instruction buffer 124.

Two instructions including an instruction designating to store the return part in the LR instruction buffer 124 and an instruction to indicate a start address of this return part may be used instead of the one LR filling instruction.

Selector 111 selects an instruction address register from any one of the ordinary instruction address register 112, the TAR instruction address register 113 and the LR instruction address register 114 in response to designation by the instruction fetch control unit 102. The address configured in the instruction address register selected is output to the instruction cache 10.

The ordinary instruction address register 112 is an instruction address register generally used in fetching the instruction.

The TAR instruction address register 113 is an instruction address register used in fetching an instruction of the loop part specified by the TAR filling instruction.

The LR instruction address register 114 is an instruction address register used in fetching an instruction of the return part specified by the LR filling instruction.

A term [Address register] is a register to register the address of the instruction, when instructions are fetched from the instruction cache 10 and others.

The selector 121 selects the instruction buffer from any one of the ordinary instruction buffer 122, the TAR instruction buffer 123 and the LR instruction buffer 124 in response to designation by the instruction fetch control unit 102. Instructions filled in the instruction buffer selected are supplied to the instruction execution 101.

The ordinary instruction buffer 122 is generally an instruction buffer to store and supply the instructions.

The TAR instruction buffer 123 is an instruction buffer to store and supply instructions of the loop part specified by the TAR filling instruction.

The LR instruction buffer 124 is an instruction buffer to store and supply instructions of the return part specified by the LR filling instruction.

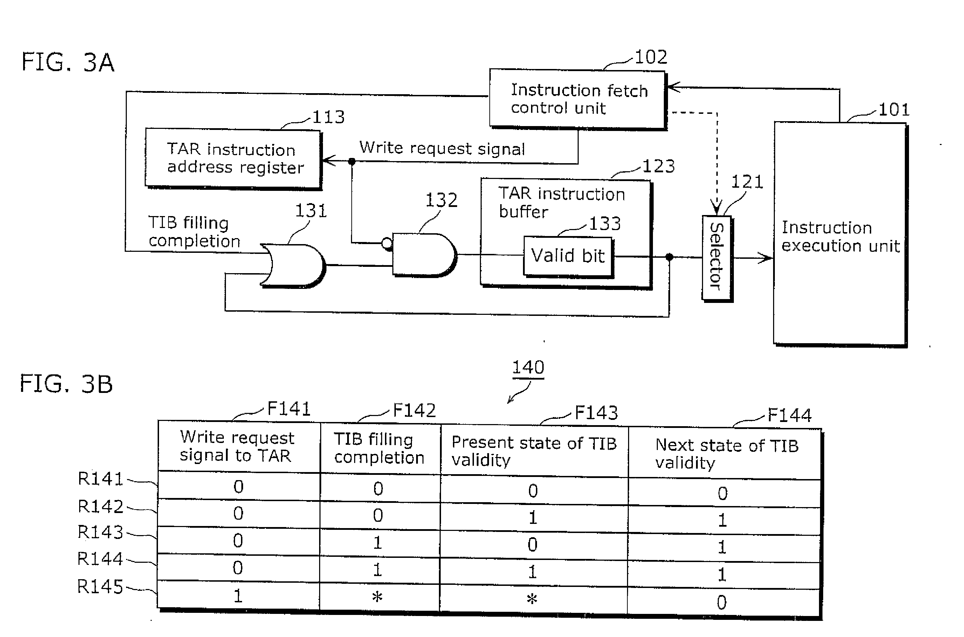

Note that, as shown in FIGS. 3A and 3B, when instructions of the loop part to fill the TAR instruction buffer 123 are under or before operation, the TAR instruction buffer 123 outputs value '0" retained at Valid bit 133 (F143) through the selector 121 to the instruction execution unit 101 to inform filling is not completed (R141) even when it is selected as an instruction supplying source. On the other hand, when filling is completed, value "1" as a Valid bit is output to inform completion of filling. When the TAR filling instruction is executed in the instruction execution unit 101 and a filling start address is configured in the TAR instruction address register 113, write request signal "1" is output from the instruction fetch control unit 102 to the TAR instruction address register 113. As shown in FIG. 3B, value "0" as a Valid bit is at this time configured based on the logic table 140 to inform through the selector 121 no filling in the instruction execution unit 101 (R145) even when the TAR instruction buffer 123 is selected, resulting in no supply of instructions from the TAR instruction buffer 123. The LR instruction buffer 124 is also performed similarly.

Operation of the processor in the present embodiment will be described next.

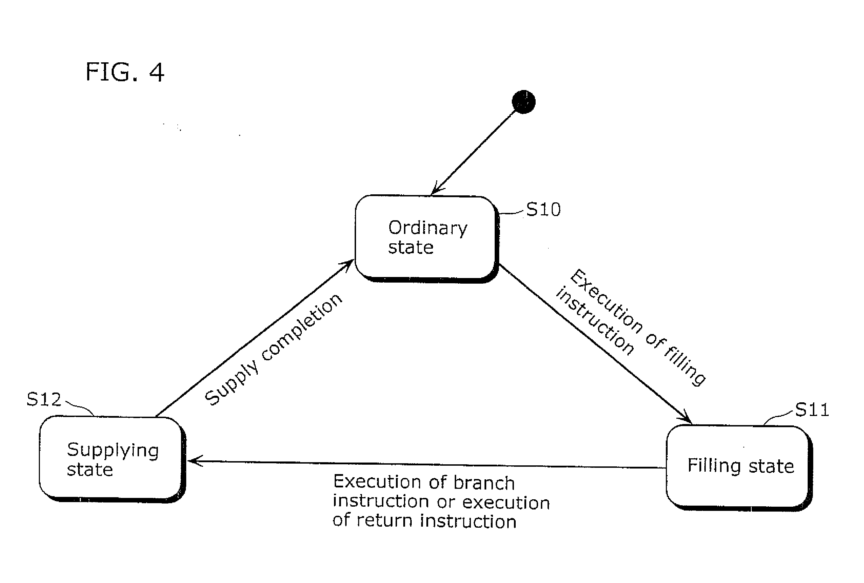

As shown FIG. 4, when the TAR filling instruction is executed in the instruction execution unit 101, the instruction fetch control unit 102 receives the filling start address configured in the TAR filling instruction to configure in the TAR instruction address register 113. Instructions of the loop part specified by the TAR filling instruction are filled in the TAR instruction buffer 123 during an interval when the ordinary instruction is filled in the ordinary instruction buffer 122 (filling state S11). The instruction fetch control unit 102 at this time controls betweenwhiles the selector 111 to select the TAR instruction address register 113.

The TAR branch instruction and the corresponding TAR filling instruction are executed in the instruction execution unit 101 and the instruction fetch control unit 102 further supplies the instruction from the TAR instruction buffer 123 to the instruction execution unit 101 (supplying state S12), when instructions in the loop part are executed. The instruction fetch control unit 102 at this time controls the selector 121 to select the TAR instruction buffer 123 as an instruction supplying source.

When the loop part is repeatedly executed in the instruction execution unit 101, the instruction fetch control unit 102 further repeatedly supplies instructions from the TAR instruction buffer 123. The TAR branch instruction is then executed in the instruction execution unit 101 to exit the loop part and supply the instruction to the instruction execution unit 101 from the ordinary instruction buffer 122 (ordinary state S10). The instruction fetch control unit 102 at this time controls the selector 121 to select the ordinary instruction buffer 122 as an instruction supplying source.

When the LR filling instruction is executed in the instruction execution unit 101, the instruction fetch control unit 102 similarly receives a filling start address configured in the LR filling instruction from the instruction execution unit 101 to configure in the LR instruction register 114. The instruction of the return part specified by the LR filling instruction is filled in the LR instruction buffer 124 during an interval when the instructions are filled in the ordinary instruction buffer 122 (filling state S11). The instruction fetch control unit 102 at this time controls betweenwhiles the selector 111 to select the LR instruction buffer 114 as an instruction supplying source.

When the LR filling instruction and the corresponding LR return instruction are executed in the instruction execution unit 101 and instructions of the return part are executed, the instruction fetch control unit 102 further supplies the instruction to the instruction execution unit 101 from the LR instruction buffer 124 (supplying state S12). The instruction fetch control unit 102 at this time controls the selector 121 to select the LR instruction buffer 124 as an instruction supplying source.

When the LR return instruction is executed in the instruction execution unit 101 to exit the return part, the instruction fetch control unit 102 supplies the instruction to the instruction execution unit 101 from the ordinary instruction buffer 122 (ordinary state S10). The instruction fetch control unit 102 at this time controls the selector 121 to select the ordinary instruction buffer 122 as an instruction supplying source.

Processing of the instruction filling in the instruction fetch control unit 102 (referred to as instruction filling process hereinafter) in the present embodiment will be described next.

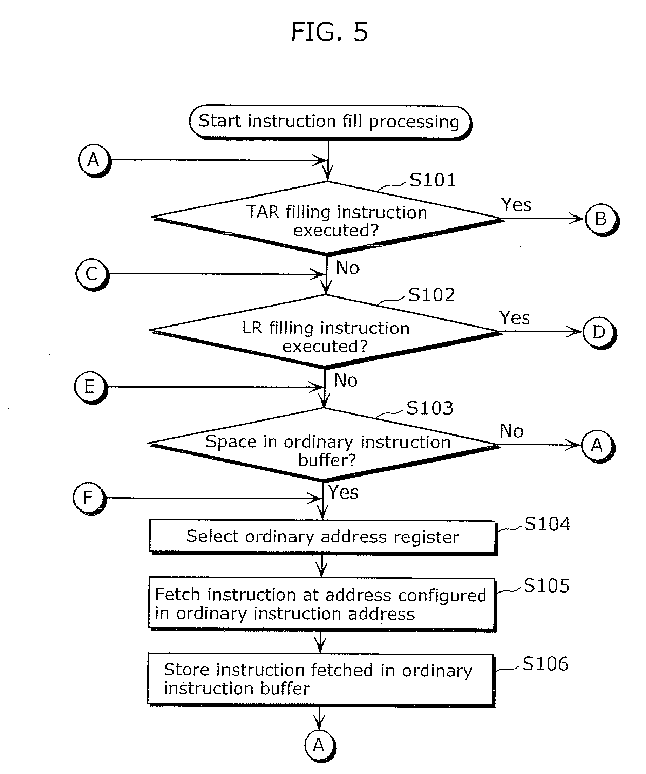

As shown in FIG. 5, when the TAR filling instruction and the LR filling instruction are not executed in the instruction execution unit 101 (S101: No and S102: No), the instruction fetch control unit 102 controls the selector 111 to select the ordinary instruction register 112 (S104) when the ordinary instruction buffer 122 is likely to have spaces (S103: Yes). Instructions at address configured in the ordinary instruction address register 112 are then fetched from the instruction cache 10 (S105) to store in the ordinary instruction buffer 122 (S106).

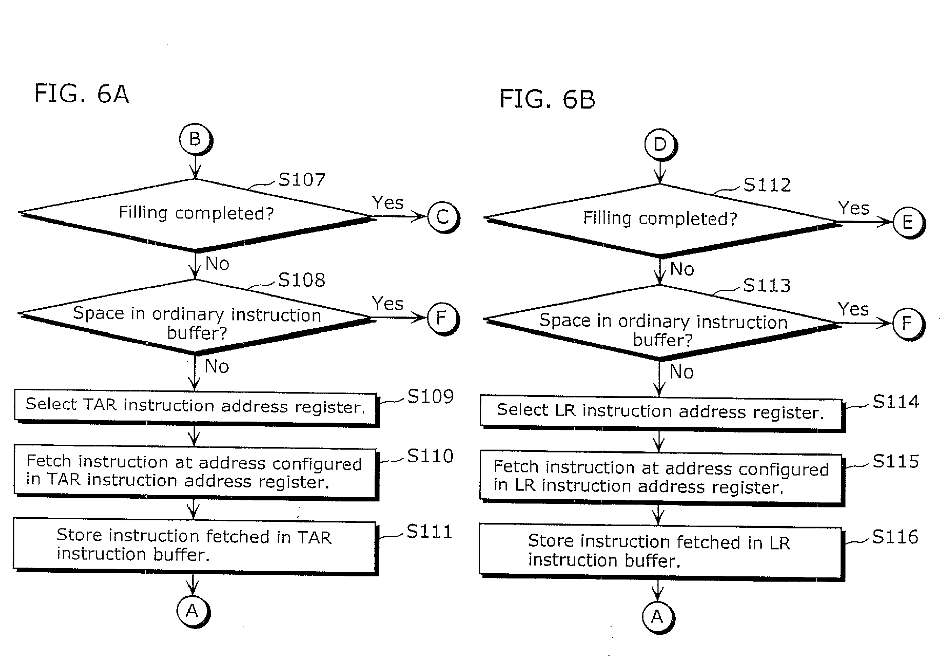

On the other hand, as shown in FIGS. 5 and 6A, when the TAR filling instruction is executed in the instruction execution unit 101 (S101: Yes), the instruction fetch control unit 102 controls the selector 111 to select the TAR instruction address register 113 (S109) until completing to fill the TAR instruction (S107: No) while choosing a timing when there is little chance to have vacancy in the ordinary instruction buffer 122 (S108: No). Instructions at address configured in the TAR instruction address register 113 are then fetched from the instruction cache 10 (5110) to store in the TAR instruction buffer 123 (S111).

As shown in FIGS. 5 and 6B, when the LR filling instruction is executed in the instruction execution unit 101 (S102: Yes), the instruction fetch unit 102 similarly controls the selector 111 to select the LR instruction address register 114 (S114) until completing to fill the LR instruction (S112: No) while choosing a timing when there is little chance to have space in the ordinary instruction buffer 122 (S113: No). Instructions at address configured in the LR instruction address register 114 are then fetched from the instruction cache 10 (S115) to store in the LR instruction buffer 124 (S116).

Processing of the instruction supply in the instruction fetch control unit 102 (referred to as instruction supply process hereinafter) in the present embodiment will be described next.

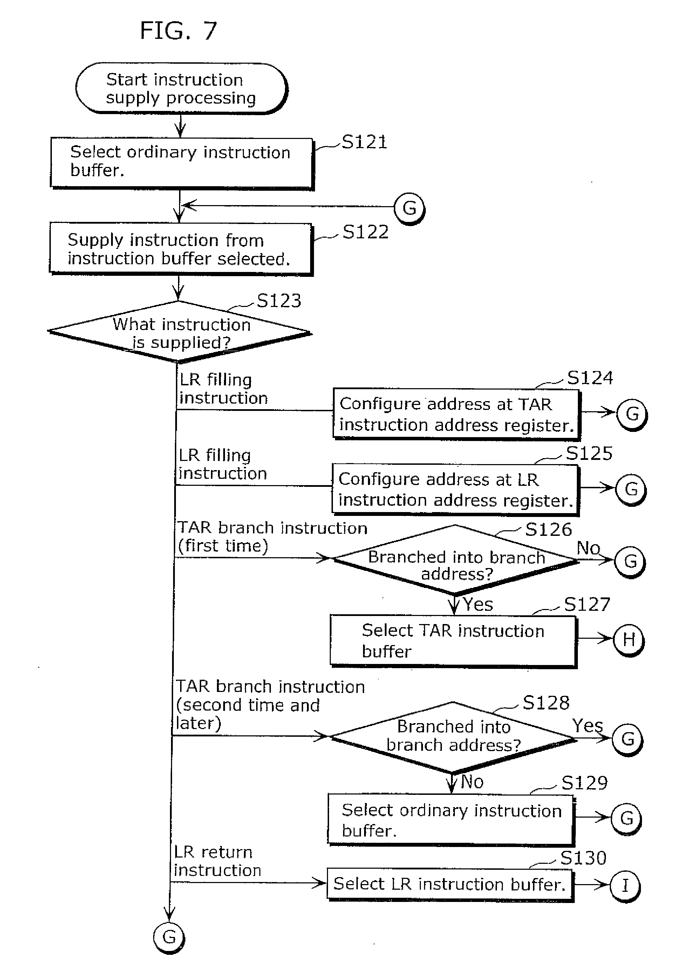

As shown in FIG. 7, the instruction fetch control unit 102 controls the selector 121 to select the ordinary instruction buffer (S121) to supply the instruction to the instruction execution unit 101 from the instruction buffer selected(S122). Following processes (1) to (5) are executed in response to the instruction executed in the instruction execution unit 101.

(1) When the instruction executed in the instruction execution unit 101 is the TAR filling instruction, the instruction fetch control unit 102 receives a filling start address configured in the TAR filling instruction from the instruction execution unit 101 to configure in TAR address register 113 (S124). The instruction is then supplied from the instruction buffer selected (S122).

(2) When the instruction executed in the instruction execution unit 101 is the LR filling instruction, the instruction fetch control unit 102 receives a filling start address configured in the LR filling instruction from the instruction execution unit 101 to configure in the LR address register 114 (S125). The instruction is then supplied from the instruction buffer selected (S122).

(3) When the instruction is not branched to a branch address wherein the instruction executed in the instruction execution unit 101 is the TAR branch instruction (first time), the instruction fetch control unit 102 supplies the instruction from the instruction buffer selected, that is, the ordinary instruction buffer 122 (S122).

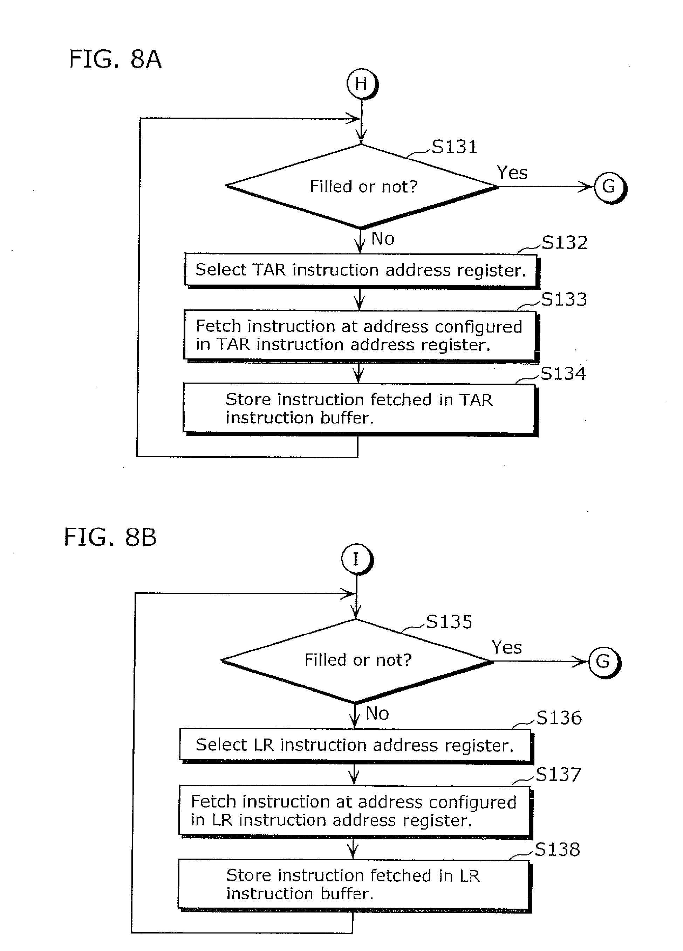

On the other hand, when the instruction is branched to the branch address, the instruction fetch control unit 102 controls the selector 121 to select the TAR instruction buffer 123 (S127). As shown in FIG. 8A, it further controls the selector 111 to select the TAR instruction address register 113 (S133) to fetch the instruction at address configured in the TAR instruction address register 113 from the instruction cache 10 (S133) and store the instruction fetched in the TAR instruction buffer 123 (S134) until the loop part specified by the TAR filling instructions is filled in the TAR instruction buffer 123 (S131: No). When the loop part specified by the TAR filling instruction is filled (S131: Yes), the instruction is supplied from the instruction buffer selected, that is, the TAR instruction buffer 123 (S122).

(4) When the instruction is branched to the branch address, wherein the instruction executed in the instruction execution unit 101 is TAR branch instruction (second time or later) (S128: Yes), the instruction fetch control unit 102 supplies the instruction from the instruction buffer selected, that is, the TAR instruction buffer 123 (S122). On the other hand, when the instruction is not branched to the branch address (5129: No), it controls the selector 121 to select the ordinary instruction buffer 122 (S129). The instruction is supplied from the instruction buffer selected, that is, the ordinary instruction buffer 122 (S122).

(5) When the instruction executed in the instruction execution unit 101 is the LR return instruction, the instruction fetch control unit 102 controls the selector 121 to select the LR instruction buffer 124 (S130). As shown in FIG. 8B, it controls the selector 111 to select the LR instruction address register 114 (5136) to fetch the instruction at address configured in the LR instruction register 114 from the instruction cache 10 (S137) and store in the instruction fetched in the LR instruction buffer 124 (S138) until the return part specified by the LR filling instruction is filled in the LR instruction buffer 124 (S135: No). When the return part including the return target instructions in the LR return instruction is filled (S135: Yes), the instruction is supplied from the instruction buffer selected, that is, the LR instruction buffer 124 (S122).

An operational example of the processor in the present embodiment will be described next.

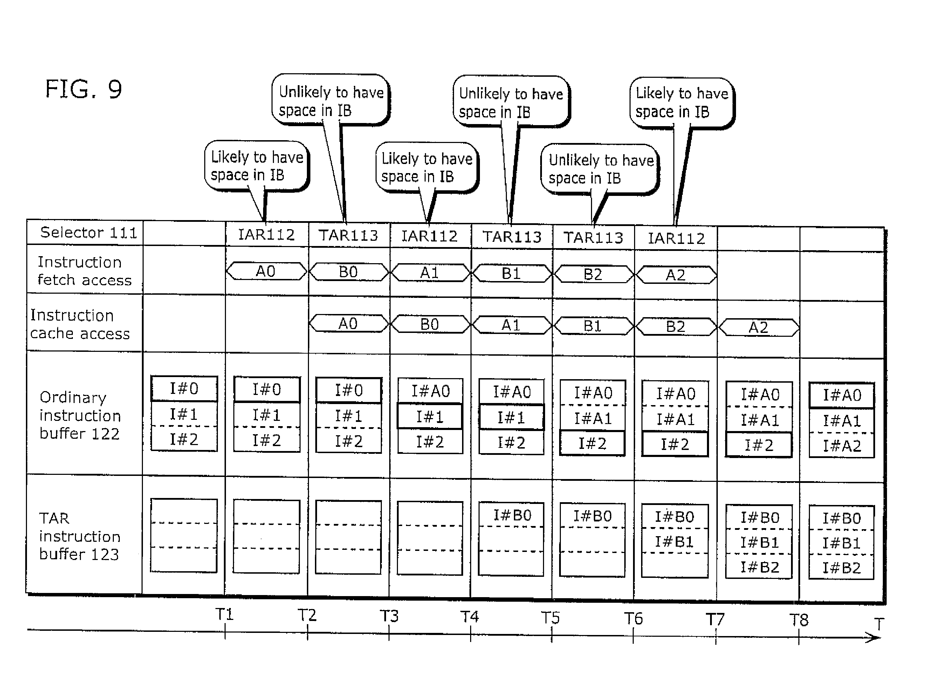

As shown in FIG. 9, an instruction buffer enabling to fill three instructions involves as an example the ordinary instruction buffer 122, the TAR instruction buffer 123 and the LR instruction buffer 124.

In FIG. 9, IB then indicates the ordinary instruction buffer 122. IAR112 also indicates the ordinary instruction address register 112. TAR113 further indicates the TAR instruction address register 113.

Instructions stored in instruction fetch address "A0" to"A2" are assigned as "I#A0" to "I#A2", while instructions stored in instruction fetch address "B0" to"B2" are assigned as "I#B0" to "I#B2".

A term [Instruction fetch address] indicates an address to store the instruction to a fetch target.

Instructions "I#A0" to "I#A2" are further stored in the ordinary instruction buffer 122, while instructions "I#B0" to "I#B2" are further stored in the TAR instruction buffer 123.

Storage is performed in a following order from (1) to (7) when stored.

(1) Since the ordinary instruction buffer 122 is likely to have space in time T1 to T2, the instruction fetch control unit 102 configures an instruction fetch address "A0" in the ordinary instruction address register 112.

(2) In time T2 to T3, the instruction fetch control unit 102 controls the selector 111 to select the ordinary instruction address register 112 to output an instruction fetch address "A0" configured in the ordinary instruction address register 112 to the instruction cache 10. Instruction "I#A0" specified by the instruction fetch address "A0" is fetched from the instruction cache 10.

The instruction fetch control unit 102 configures an instruction fetch address "B0" in the TAR instruction address register 113, since the ordinary instruction buffer 122 is unlikely to have space.

(3) In time T3 to T4, the instruction fetch unit 102 stores an instruction "I#A0" fetched in the ordinary instruction buffer 122.

The instruction fetch control unit 102 also controls the selector 111 to select the ordinary instruction address register 112 to output instruction fetch the address "B0" configured in the ordinary instruction address register 112 selected to the instruction cache 10. Instruction "I#B0" specified by the instruction fetch the address "B0" is then fetched from the instruction cache 10.

The instruction fetch control unit 102 configures an instruction fetch address "A1" in the ordinary instruction address register 112, since the ordinary instruction buffer 122 is likely to have space.

(4) In time T4 to T5, the instruction fetch control unit 102 stores the instruction "I#B0" fetched from the instruction cache 10 in the TAR instruction buffer 123.

The instruction fetch control unit 102 also controls the selector 111 to select the ordinary instruction address register 112 to output the instruction fetch address "A1" configured in the ordinary instruction address register 112 selected to the instruction cache 10. An instruction "I#A1" specified by the instruction fetch address "A1" is then fetched from the instruction cache 10.

The instruction fetch control unit 102 configures an instruction fetch address "B1" in the TAR instruction address register 113, since the ordinary instruction buffer 122 is unlikely to have space.

(5) In time T5 to T6, the instruction fetch control unit 102 stores an instruction "I#A1" fetched from the instruction cache 10 in the ordinary instruction buffer 122.

The instruction fetch control unit 102 also controls the selector 111 to select the TAR instruction address register 113 to output an instruction fetch address "B1" configured in the TAR instruction address register 113 selected to the instruction cache 10. An instruction "I#B1" specified by the instruction fetch address "B1" is then fetched from the instruction cache 10.

The instruction fetch control unit 102 configures an instruction fetch address "B2" in the TAR instruction address register 113, since the ordinary instruction buffer 122 is unlikely to have space.

(6) In time T6 to T7, the instruction fetch control unit 102 stores the instruction "I#B1" fetched from the instruction cache 10 in the TAR instruction buffer 123.

The instruction fetch control unit 102 also controls the selector 111 to select the TAR instruction address register 113 to output an instruction fetch address "B2" configured in the TAR instruction address register 113 selected to the instruction cache 10. An instruction "I#B2" specified by the instruction fetch address "B2" is then fetched from the instruction cache 10.

The instruction fetch control unit 102 configures an instruction fetch address "A2" in the ordinary instruction address register 112, since the ordinary instruction buffer 122 is likely to have space.

(7) In time T7 to T8, the instruction fetch control unit 102 stores the instruction "I#B2" fetched from the instruction cache 10 in the TAR instruction buffer 123.

The instruction fetch control unit 102 also controls the selector 111 to select the ordinary instruction address register 112 to output the instruction fetch address "A2" configured in the ordinary instruction address register 112 selected to the instruction cache 10. An instruction "I#A2" specified by the instruction fetch address "A2" is then fetched from the instruction cache 10.

As described above, the processor in the present embodiment can omit repeated access to the instruction cache to fetch in the loop part and the subroutine return part by providing with the TAR instruction buffer 123, the LR instruction buffer 124 secondarily used and others in addition to the ordinary instruction buffer 122 used in a main section. By supplying the instructions from the TAR instruction buffer 123, the LR instruction buffer 124 and others can reduce a penalty of a pipeline and fill vacancy of the pipeline caused by branching. Omitting an access to the instruction cache can further avoid a wait for access and others to improve performance of the execution process. In the TAR filling instruction, a period to fetch can be adjusted to adjust a period to store in the TAR instruction buffer 123, so that even when a capacity of the instruction buffer is increased, a sufficient period to fully express its effect is precalculated to execute the TAR filling instruction in advance, allowing to store and supply sufficient instructions. An access frequency to the instruction cache is consequently reduced to enable execution of a high-speed loop process and others while keeping power consumption under control. A period to store in the LR instruction buffer 124 can be similarly adjusted in the LR filling instructions.

### (Embodiment 2)

Embodiment 2 according to the present invention will be described next with reference to the drawings.

A processor in the present embodiment is provided with a plurality of the instruction buffers storing the instruction in the loop part and is characterized with supplying the instruction in a plurality of the loop parts.

A processor of the present embodiment is described in consideration of the above aspect.

Note that, identical numerical references are given and then its explanation is omitted when the components are the same as those in embodiment 1.

A configuration of the processor in the present embodiment is first described.

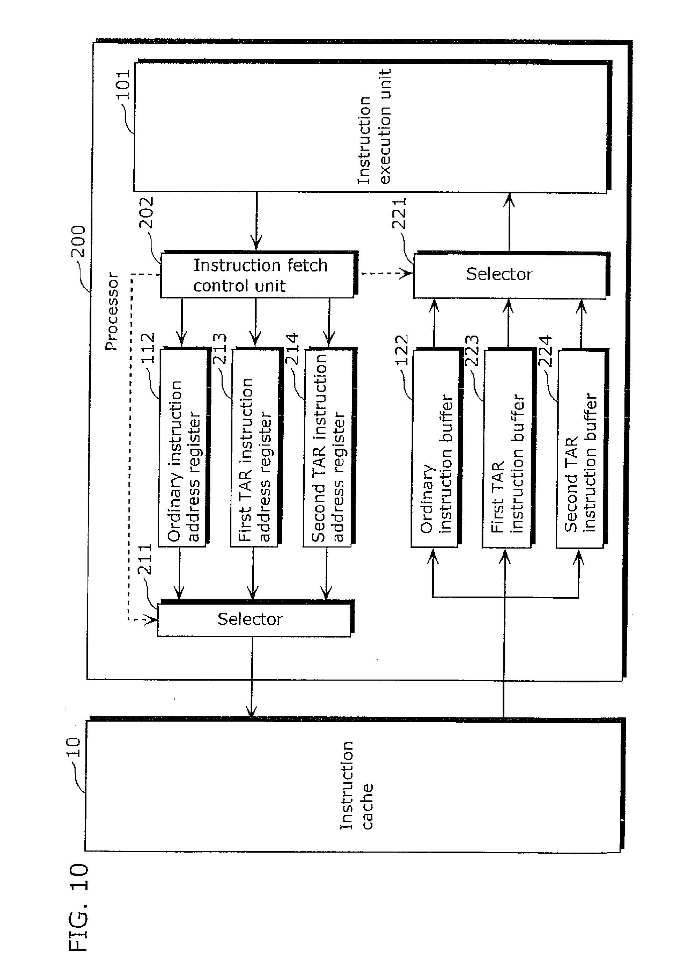

As shown in FIG. 10, a processor 200 differs from the processor 100 in the points shown as (1) to (7) below.

(1) An instruction fetch control unit 202 is provided instead of the instruction fetch control unit 102.

When the first TAR filling instruction is executed in the instruction execution unit 101, the instruction fetch control unit 202 fills an instruction in the first loop part specified by the first TAR filling instruction in the first TAR instruction buffer 223 during an interval when the instruction is filled in the ordinary instruction buffer 122. When the instruction in the first loop part specified by the first TAR filling instruction is executed in the instruction execution unit 101, the instruction is supplied from the first TAR instruction buffer 223 to the instruction execution unit 101.

When the second TAR filling instruction is executed in the instruction execution unit 101, the instruction fetch control unit 202 fills the instructions in the second loop part specified by the second TAR filling instruction in the second TAR instruction buffer 224 during an interval when the instruction is supplied from the first TAR filling instruction buffer 233. When the instruction in the second loop part specified by the first TAR filling instruction is executed in the instruction execution unit 101, the instruction is supplied from the second TAR instruction buffer 224 to the instruction execution unit 101.

(2) A selector 211 is provided instead of the selector 111. The selector 211 selects an instruction address register from any one of the ordinary instruction address register 112, the first TAR instruction address register 213 and the second TAR instruction address register 214 in response to designation by an instruction fetch control unit 202. The address configured in the instruction address register selected is output to the instruction cache 10.

(3) The first TAR instruction address register 213 is provided instead of the TAR instruction address register 113.

The first TAR instruction address register 213 is an instruction address register used to fetch the instruction in the loop part specified by the first TAR filling instruction.

(4) The second TAR instruction address register 214 is provided instead of the LR instruction address register 114.

The second TAR instruction address register 214 is an instruction address register used to fetch the instruction in the loop part specified by the second TAR filling instruction.

(5) A selector 221 is provided instead of the selector 121.

The selector 221 selects an instruction buffer from any one of the ordinary instruction buffer 122, the first TAR instruction buffer 223 and the second TAR instruction buffer 224 in response to designation by an instruction fetch control unit 202. The instruction filled in the instruction buffer selected is supplied to the instruction execution unit 101.

(6) The first TAR instruction buffer 223 is provided instead of the TAR instruction buffer 123.

The first TAR instruction buffer 223 is an instruction buffer to store and supply the instruction in the loop part specified by the first TAR filling instruction.

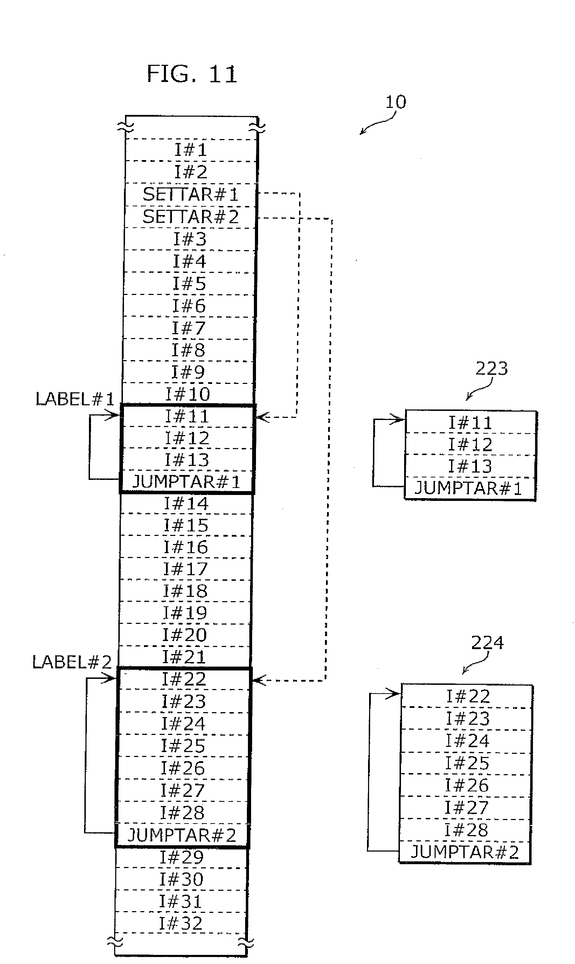

For example, as shown in FIG. 11, the first loop part specified by first TAR filling instruction "SETTAR#1", that is, the first loop part from an instruction "I#11" at address LABEL#1" to the first TAR branch instruction "JUMPTAR#1" is filled in the first TAR instruction buffer 223.

(7) The second TAR instruction buffer 224 is provided instead of the LR instruction buffer 124.

The second TAR instruction buffer 224 is an instruction buffer to store and supply the instruction in the loop part specified by the second TAR filling instruction.

For example, as shown in FIG. 11, the second loop part specified by second TAR filling instruction "SETTAR#2", that is, the second loop part from an instruction "I#22" at address "LABEL#2" to the second TAR branch instruction "JUMPTAR#2" is filled in the second TAR instruction buffer 224.

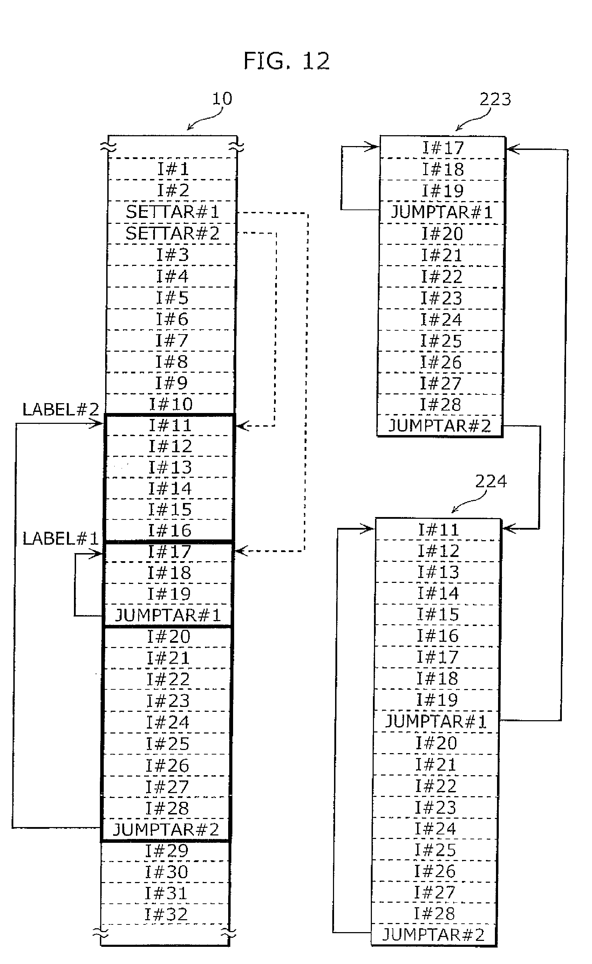

As shown in FIG. 12, in a double loop, the first loop part specified by first TAR filling instruction "SETTAR#1", that is, an inner loop part from an instruction "I#17" at address "LABEL#1" to the first TAR branch instruction "JUMPTAR#1" is filled in the first TAR instruction buffer 223. A part of an outer loop part from an instruction "I#20" to the second TAR branch instruction "JUMPTAR#2" is also filled in the first TAR instruction buffer 223.

The second loop part specified by the second TAR filling instruction "SETTAR#2", that is, an outer loop part from an instruction "I#11" at address "LABEL#2" to the second TAR branch instruction "JUMPTAR#2" is also filled in the second TAR instruction buffer 224.

The instruction fetch control unit 202 then controls the selector 221 to select the second TAR instruction buffer 224, when in the instruction execution unit 101, the second TAR branch instruction "JUMPTAR#2" supplied from the first TAR instruction buffer 223 is executed to branch to address "LABEL#2".

The instruction fetch control unit 202 also controls the selector 221 to select the first TAR instruction buffer 223, when in the instruction execution unit 101, the first TAR branch instruction "JUMPTAR#1" supplied from the second TAR instruction buffer 224 is executed to branch to address "LABEL#1".

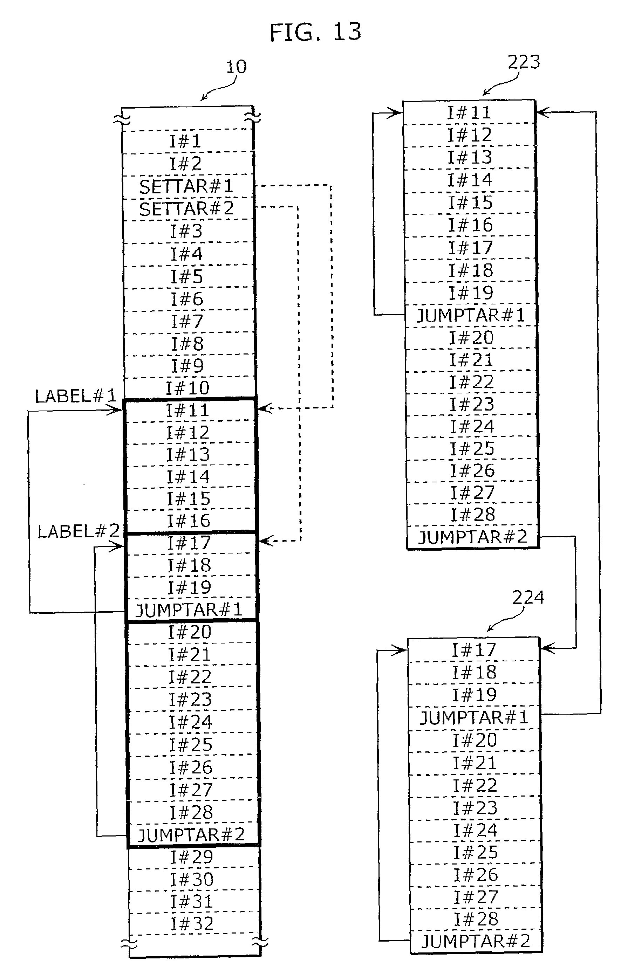

As shown in FIG. 13, the first loop part specified by first TAR filling instruction "SETTAR#1", that is, a loop part from an instruction "I#11" at address "LABEL#1" to the first TAR branch instruction "JUMPTAR#1" is similarly filled in the first TAR instruction buffer 223. A part from an instruction "I#20" to the second TAR branch instruction "JUMPTAR#2" is further filled in the first TAR instruction buffer 223.

The second loop part specified by second TAR filling instruction "SETTAR#2", that is, a loop part from an instruction "I#17" at address "LABEL#2" to the second TAR branch instruction "JUMPTAR#2" is also filled in the second TAR instruction buffer 224.

The instruction fetch control unit 202 also controls the selector 221 to select the second TAR instruction buffer 224, when in the instruction execution unit 101, the second TAR branch instruction "JUMPTAR#2" supplied from the first TAR instruction buffer 223 is executed to branch to address "LABEL#2".

The instruction fetch control unit 20 also controls selector 221 to select the first TAR instruction buffer 223, when in the instruction execution unit 10, the first TAR branch instruction "JUMPTAR#1" supplied from the second TAR instruction buffer 224 is executed to branch to address "LABEL#1".

As described above, the processor in the present embodiment can omit repeated access to the instruction cache to fetch in a plurality of the loop part by providing with a plurality of the TAR instruction buffer secondarily used and others in addition to the ordinary instruction buffer 122 used in a main section. Supplying the instruction from the first TAR instruction buffer 223, the second TAR instruction buffer 224 and others can reduce a penalty of a pipeline and fill idle portion of the pipeline caused by branching. Omitting an access to the instruction cache can avoid a wait for access and others to improve performance of the execution process. A period to fetch in the first TAR filling instruction can be adjusted to adjust a period to store in the first TAR instruction buffer 223 and a period to fetch in the second TAR filling instruction is adjusted to adjust a period to store in the second TAR instruction buffer 224, so that even when a capacity of the instruction buffer is increased, a sufficient period to fully express its effect is precalculated to execute the first TAR filling instruction and the second TAR filling instruction in advance, allowing to store and supply the sufficient instruction. An access frequency to the instruction cache is consequently reduced to enable execution of a high-speed loop process and others while keeping power consumption under control. Reduction of the access frequency prevents power consumption from increase.

### (Others)

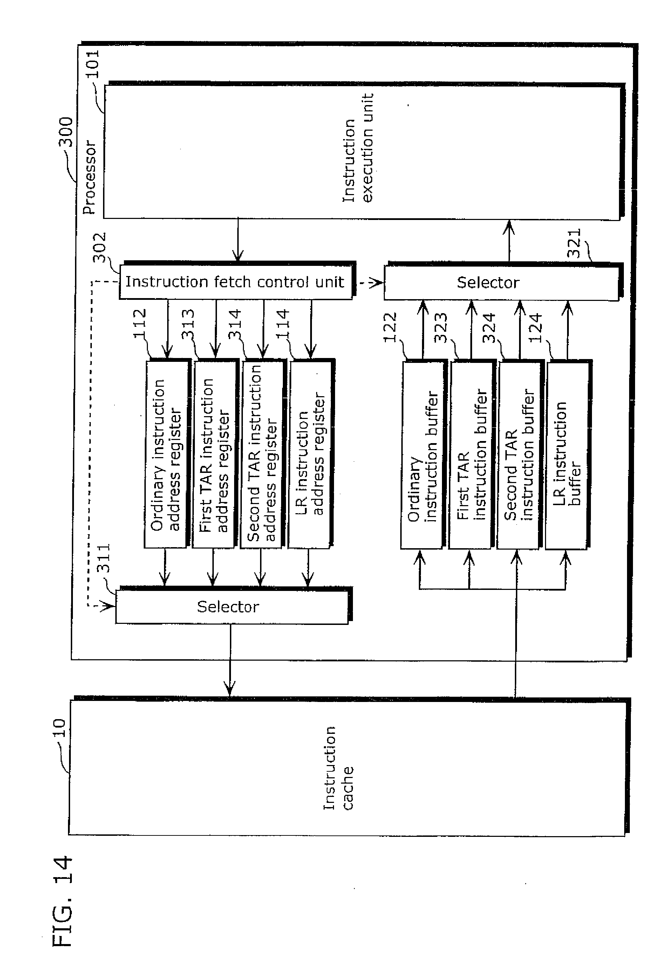

As shown in FIG. 14, a processor 300 may be provided with an instruction execution unit 101, an instruction fetch control unit 302, a selector 311, an ordinary instruction address register 112, the first TAR instruction address register 313, the second TAR instruction address register 314, an LR instruction address register 114, a selector 321, an ordinary instruction buffer 122, the first TAR instruction buffer 323, the second TAR instruction buffer 324 and an LR instruction buffer 124. That is, it may be provided with a plurality of the TAR instruction buffers and the LR instruction buffers to supply the instructions in a plurality of the loop parts and the instructions of the subroutine parts.

Processors 100 and 300 may also be provided with an instruction buffer serving as both TAR instruction buffer and LR instruction buffer instead of the LR instruction buffer 124. They may be further provided with an instruction address register serving as both TAR instruction address register and LR instruction address register instead of the LR instruction register 114.

A processor may also be implemented with a full custom Large Scale Integration (LSI). Or it may be achieved with a semi-custom LSI such as Application Specific Integrated Circuit (ASIC) and others. It may also be implemented by a programmable logic device such as Field Programmable Gate Array (FPGA), Complex Programmable Logic Device (CPLD) and others. It may be also implemented by a dynamic reconfigurable device, which can dynamically rewrite a circuitry.

Design data formed in these LSI may use a program described in a hardware description language such as Very high speed integrated circuit Hardware Description Language (VHDL), Verilog-HDL, System C and others (referred to as HDL program hereinafter) to perform one or more functions included in the processor. A gate level netlist obtained by logic synthesis of the HDL program may also be used. Or a macrocell information, in which configuration information, process condition and others are attached to the gate level netlist, may be used. Or mask data defining dimension, timing and others may be used.

Design data may be recorded in a computer readable recording medium such as an optical recording medium (for example, CD-ROM and others), a magnetic recording medium (for example, hard disk and others), a magnetic optical recording medium (for example, MO and others), a semiconductor memory (for example, memory card and others) and others in order to read with a hardware system such as a computer system, an embedded system and others. Design data read through these recording mediums with other hardware system may be downloaded via a download cable to a programmable logic device.

Design data may also be held in a hardware system on a transmission channel in order to acquire with other hardware system via a transmission channel such as a network and others. Furthermore, design data acquired by other hardware system via the transmission channel from a hardware system may be downloaded via a download cable to a programmable logic device.

Design data with logic synthesis, configuration and wiring may be recorded on a serial ROM to make transfer to FPGA possible when applying current. Design data recorded on the serial ROM may be directly downloaded on FPGA when applying current.

### Industrial Applicability

The present invention can be used as a processor to fetch and execute the instruction stored in the instruction cache, particularly the processor to supply the instructions stored in the instruction buffer for the loop part when executing the instruction of the loop part, reducing an access frequency to the instruction cache to improve performance of the execution process and prevent power consumption from increase.

## Claims

1. A processor which fetches an instruction stored in an instruction cache, and executes the instruction, said processor comprising:
a main instruction buffer which stores and supplies one or more instructions fetched from the instruction cache;
a first sub-instruction buffer which stores and secondarily supplies one or more instructions fetched from the instruction cache;
a selector which selects either said main instruction buffer or said first sub-instruction buffer as an instruction supply source; and
an instruction fetch control unit operable to:
fetch one or more instructions from a first address to store in said first sub-instruction buffer when the instruction is supplied, via said selector, from said main instruction buffer and a first filling instruction is executed, the first filling instruction indicating to fill one or more instructions fetched from the first address of said instruction cache in said first sub-instruction buffer; and
control said selector to select said first sub-instruction buffer and to supply the instruction via said selector from said first sub-instruction buffer in the case where one or more instructions fetched from said first address are repeatedly supplied.

2. The processor according to Claim 1,
wherein when said first filling instruction is executed, said instruction fetch control unit is further operable to fetch one or more instructions from said first address to store in said first sub-instruction buffer during an interval when one or more instructions are fetched from said instruction cache to store in said main instruction buffer.

3. The processor according to Claim 1, further comprising
a second sub-instruction buffer to store and secondarily supply one or more instructions fetched from said instruction cache,
wherein said selector further selects one of said main instruction buffer, said first sub-instruction buffer and said second sub-instruction buffer as an instruction supplying source, and
said instruction fetch control unit is operable to:
fetch one or more instructions from said second address to store in said second sub-instruction buffer when the second filling instruction indicating to fill one or more instructions fetched from the second address of said instruction cache in said second sub-instruction buffer is executed; and
control said selector to select said second sub-instruction buffer and to supply the instruction via said selector from said second sub-instruction buffer in the case where one or more instructions fetched from said second address are repeatedly executed.

4. The processor according to Claim 3,
wherein said first address is a branch target address of the branch instruction and
said second address is a return target address from a subroutine for the instruction sequence stored in said instruction cache,
said first sub-instruction buffer stores a predetermined number of instructions from said first address, and
said second sub-instruction buffer stores a predetermined number of instructions from said second address.

5. The processor according to Claim 1,
wherein said first address is the branch target address of the branch instruction for the instruction sequence stored in said instruction cache,
said first sub-instruction buffer stores a predetermined number of instructions from said first address,
said instruction fetch control unit is operable to wait to complete filling of a loop part to supply the predetermined number of the instructions from said first address in the case of repeatedly supplying one or more instructions fetched from said first address, when the predetermined number of instructions from said first address is not filled in said first sub-instruction buffer.

6. An instruction filling method of fetching an instruction stored in an instruction cache, and executing the fetched instruction, said method comprising:
controlling:
a main instruction buffer to store and supply one or more instructions fetched from said instruction cache;
a first sub-instruction buffer to store and secondarily supply one or more instructions fetched from said instruction cache; and
a selector to select as the instruction supplying source either said main instruction buffer or said first sub-instruction buffer, and
fetching one or more instructions from said first address to store in said first sub-instruction buffer when the instruction is supplied via said selector from said main instruction buffer and the first filling instruction indicating to fill one or more instructions fetched from first address of said instruction cache is executed, and
controlling said selector to select said first sub-instruction buffer and to supply via said selector the instruction from said first sub-instruction buffer in the case where one or more instructions fetched from said first address are repeatedly supplied.
